# EUROPEAN PATENT SPECIFICATION

(11) **EP 1 264 510 B1**
(45) Date of publication and mention of the grant of the patent: **04.10.2006**
(21) Application number: 01919476.0
(22) Date of filing: 08.03.2001
(51) Int. Cl.: H04Q 11/04, H04Q 7/38, H04L 12/56, H04L 29/06

(54) **ADAPTATION OF TRANSMISSION CAPACITY IN PACKET-SWITCHED NETWORKS, USING ATM-CELLS**
ANPASSUNG DER ÜBERTRAGUNGSKAPAZITÄT IN PAKETVERMITTELTEN NETZEN UNTER VERWENDUNG VON ATM-ZELLEN
ADAPTATION DE LA CAPACITE DE TRANSMISSION DANS DES RESEAUX A COMMUTATION PAR PAQUETS PAR L'UTILISATION DE CELLULES ATM

(30) Priority: 09.03.2000 FI 20000542
(43) Date of publication of application: 11.12.2002
(73) Proprietor: Nokia Corporation, 02150 Espoo (FI)
(72) Inventor: AALTO, Mika, 02660 Espoo (FI)
(74) Representative: Holmström, Stefan Mikael
(86) International application number: PCT/FI2001/000228
(87) International publication number: WO 2001/067801

(56) References cited:
- EP-A1- 0 812 083
- WO-A1-01/18992
- WO-A1-97/31495
- WO-A1-97/39593
- FR-A1- 2 671 250

## Description

### BACKGROUND OF THE INVENTION

The invention relates to packet-switched data transmission systems and particularly to management of transmission capacity in these systems.

The invention can be applied in an ATM system (Asynchronous Transfer Mode), for example, but also in other applications of packet-switched networks. The ATM system has been developed as a transmission technique for the broadband ISDN network. Speech, data or video applications, for example, can be transmitted on the ATM network by establishing a virtual connection between the transmitter and the receiver.

On the ATM network data are transmitted in units with a standard length, which are called cells. A cell consists of 53 bytes, of which 5 bytes are reserved for the header and 48 for the actual information, i.e. pay-load. The number of cells per time unit indicates the transmission capacity needed by the user. Cells belonging to the same virtual connection are identified on the basis of a virtual path identifier VPI and a virtual channel identifier VCI, which are included in the cell header. The ATM network employs these identifiers to transmit traffic on the network from the transmitter to the receiver via switches. On a virtual connection all cells pass through the network along the same route. Thanks to this, cells arrive at the receiver in the order of transmission. The function of the switches of the ATM network is to transmit cells at high rate and with as short delay as possible. The switches multiplex/demultiplex and route the cells by examining the information included in the cell headers. The switches should also be able to adapt to the changing network conditions.

The ATM system consists of an ATM adaptation layer where information is converted into ATM cells with a fixed length, of an ATM layer which is responsible for transmission and routing of information of different kinds via the ATM switches, and of a physical layer which transmits ATM cells to the transmission path.

### BRIEF DESCRIPTION OF THE INVENTION

A problem associated to the system described above is that broadband services and connections need transmission paths having a capacity of several megabits per second. The transmission capacity is limited in access networks, in particular. It is not, however, economical to build a lot of additional capacity. A network has to offer cost-effective services to the end users and effective allocation of capacity to different applications. The end users' devices may cause bursts and unexpected traffic situations to which the network has to react. The network should not become congested, but it should be able to monitor traffic and prevent congestion.

ATM switches are complex devices, which normally comprise several connections. The switches also have to be able to manage virtual connections between these connections, which may use different transmission techniques and have different transmission capacities. In an ideal case adaptation of transmission capacity between two connections is a very simple procedure: the actual ATM switches takes care of the management of ATM connections and the quality of service by considering the actual transmission capacity between the ATM switches.

Document EP-A-0 812 083 discloses a technique that dynamically controls the cell rate of the virtual path once it has been set up, so that it is as large as possible, up to the cell rate requested by a terminal, and so that it is fair to the plurality of terminals from which there are connection requests. Thus, it addresses a problem affecting already established connections, rather than connections to be established.

Document WO-A-01 18992 (prior art under Art.54(3) EPC) relates to the control of the rate at which information is transmitted between access nodes separated by a core network, and is based on the determination of a plurality of maximum information transmission rates along a path of communication established between the plurality of access nodes, wherein the plurality of maximum information transmission rates are communicated across the core network as messages; selecting a lowest one of the plurality of maximum information transmission rates, and; authorising and/or establishing communications at a rate no greater than the selected lowest rate, whereby each the network nodes set their respective information transmission rates to not exceed that of the lowest of the maximum information transmission rates. Thus, the network is substantially loaded by the plurality of transmissions required, and each node is required to set its transmission rate by reference to all the received messages informing of the plurality of maximum information transmission rates.

The object of the invention is to provide a solution which solves the above-mentioned problems and allows more effective utilization of transmission connections in a packet-switched network. The object is achieved with a method of adapting transmission capacities in a packet-switched network, the method comprising checking before connection set-up whether enough transmission capacity is available for said connection. The method is characterized by comparing the transmission capacities of the transmission connections at the junction of two transmission connections with different capacities, transmitting information on the real transmission capacity available from said junction at least to the switch in the direction of higher transmission capacity, the real transmission capacity being determined according to the transmission connection with lower transmission capacity, and taking the information on the real transmission capacity into account in said switch when a new connection is established.

The invention also relates to a system for adapting transmission capacities in a packet-switched network, the system comprising at least two switches between which there are at least two successive transmission connections with different transmission capacities. The system is characterized in that the system also comprises means for comparing the transmission capacities of the transmission connections at the junction of two transmission connections with different transmission capacities, means for transmitting information on the real transmission capacity available from said junction at least to the switch in the direction of higher transmission capacity, the real transmission capacity being determined according to the transmission connection with lower transmission capacity, and means for taking the information on the transmission capacity into account in the switch that received the information when a new connection is established.

The invention further relates to a transmission capacity adapter for adapting two transmission connections with different transmission capacities in a packet-switched network. The transmission capacity adapter is characterized in that it comprises means for comparing the transmission capacities of the transmission connections at the junction of two transmission connections with different transmission capacities, and means for transmitting information on the real transmission capacity available from said junction at least to a node in the direction of higher transmission speed, the transmission capacity being determined according to the transmission connection with lower transmission capacity.

Here the term node means a switch, another transmission capacity adapter or the like.

The invention is based on the idea of transmitting information to the next switch on the route used by the virtual connection that a transmission connection included in the route has a lower transmission capacity. After this, traffic amounts are adapted and new connections established according to this real transmission capacity available.

The most important advantages of the method, system and transmission capacity adapter of the invention are that they enable more effective utilization of transmission connections and decrease the need for buffering. The solution is simple and economical since transmission capacity is adapted in a separate device at the physical layer between network nodes. Furthermore, in the solution according to the invention unnecessary loading of the transmission connections can be avoided because messages on the real transmission capacity do not necessarily need to be transmitted on the transmission connection which forms a bottle neck. If messages are transmitted in both directions, they can be transmitted so infrequently that they do not substantially load the network.

In an embodiment according to the method of the invention, information on the transmission capacity available is transmitted as a message with a length of one cell at the physical layer. These messages do not unnecessarily load the transmission connections.

In another embodiment of the method according to the invention, messages on transmission capacity are transmitted at regular intervals, e.g. once in a second. In that case the switch always has up-to-date information on the real capacity of the transmission connection and establishment of connections can be managed effectively even when the transmission capacity of the connections is not constant.

In a preferred embodiment of the adapter according to the invention the adapter comprises means for determining the transmission capacity of the transmission connection on the basis of the type of the physical connection. For example, the adapter determines that the connection type used is STM-1, and thus the transmission capacity is about 155 Mbit/s. A prerequisite for this embodiment is that changes in traffic conditions should not significantly affect the transmission capacities of the transmission connections.

In an embodiment of the adapter according to the invention the adapter comprises means for receiving a message on transmission capacity and means for determining the transmission capacity of at least one transmission connection on the basis of the received message on transmission capacity. In that case there may be several successive adapters which can transmit messages on transmission capacity to one another and also compare transmission capacities on the basis of the messages received from other adapters. This method can also be used when the transmission capacities of the transmission connections are variable.

The preferred embodiments of the method, system and transmission capacity adapter according to the invention are disclosed in the dependent claims.

### BRIEF DESCRIPTION OF THE DRAWINGS

In the following the invention will be described in greater detail by examples with reference to the accompanying drawings, in which

Figure 1 is a flow chart of a method according to the invention,

Figure 2 is a block diagram illustrating a system according to the invention applied in an ATM network,

Figure 3 is a block diagram illustrating details of the ATM network application of the system according to the invention,

Figure 4 is a flow chart illustrating the function of an adapter in the system according to the invention, and

Figure 5 is a flow chart illustrating the function of a switch in the system according to the invention.

### DETAILED DESCRIPTION OF THE INVENTION

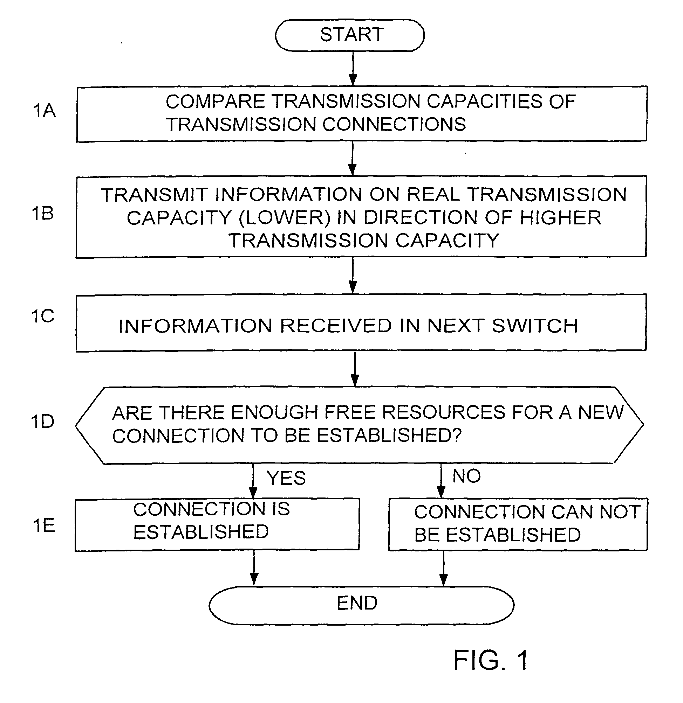

Figure 1 is a flow chart illustrating the method according to the invention. In step 1A transmission capacities of two transmission connections with different transmission capacities are compared at the junction of the transmission connections. The comparison is preferably performed in a separate transmission connection adapter. After it has been determined which transmission connection has a higher transmission capacity, a message on the real transmission capacity available is transmitted from the transmission connection adapter to a node in the direction of higher transmission capacity in step 1B. The real transmission capacity is determined according to the transmission connection with lower capacity. The node which receives the information on capacity in step 1C may be e.g. an ATM switch. When a new connection is to be established for the next time in step 1D, the switch compares the transmission capacity needed for the connection with the information received on transmission capacity. If the transmission capacity available is sufficient, set-up of a new connection is allowed in step 1E. If the amount of capacity is insufficient, a new connection cannot be established in step 1E.

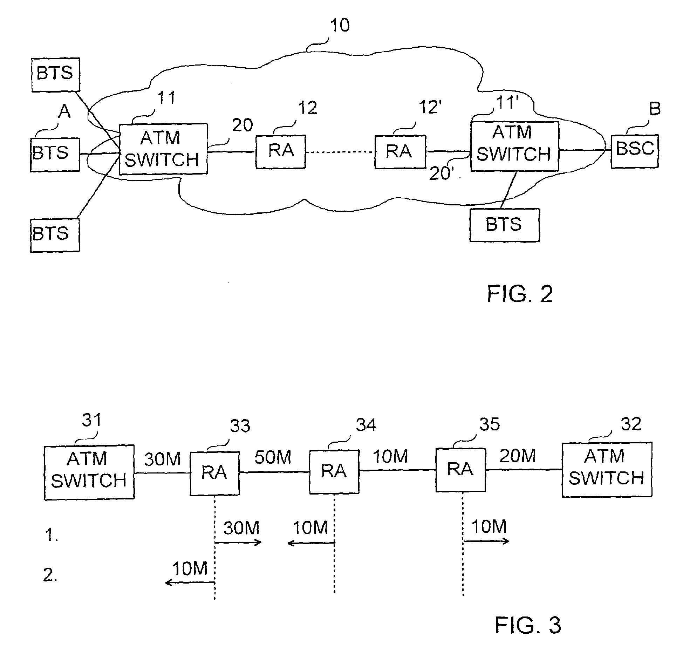

Figure 2 illustrates an ATM network 10, which is part of a mobile communication network. The system shown comprises base stations, ATM switches 11, 11', transmission connections between the base stations and the switches, transmission capacity adapters 12, 12', and a transmitter A and a receiver B between which a virtual connection is established for transmission of calls, for example.

It is assumed by way of example that the transmitter A is a base transceiver station BTS of the mobile communication network and the receiver B is a base station controller BSC. A virtual connection is established between these, and the cells containing data are transmitted along the route indicated in the cell header. It is further assumed that the indicated route passes via the first 11 and the second 11' ATM switch. Between these switches there are transmission connection sections with different transmission capacities. The connection 20 of the first ATM switch can be of the STM-1 type, in which case the transmission capacity between 11 and 12 is about 155 Mbit/s. This is followed e.g. by a radio link section 12 to12', which can be of the STM-0 type, which corresponds to about 51 Mbit/s. The last section 12' to 11' can be of the STM-1 type like the connection 20' of the second ATM switch 11'. For adapting the capacities of the STM-1 and STM-0 sections the connection is provided with transmission capacity adapters 12, 12'.

Before set-up of the ATM connection is allowed, the ATM switches check that there are enough free resources for a new ATM connection. The ATM switch also checks that the switch has enough resources for allowing a new connection. Furthermore, the switch checks that a sufficient portion of the band is free for a new connection on the transmission line. If the ATM switch finds out that the free resources are insufficient for a new connection, the ATM switch does not allow set-up of a new connection.

The ATM switch normally knows the capacity of the transmission line connected to it on the basis of the connection type of the transmission line indicated in the ATM switch. To provide the switches with information on the real transmission capacity available in the case of Figure 2, the transmission capacity adapters 12, 12' first compare the capacities of the transmission connections connected to them. In that case the first transmission capacity adapter 12 detects that the transmission capacity in the direction of the first ATM switch 11 is 155 Mbit/s and 51 Mbit/s in the direction of the second transmission capacity adapter 12'. After this the first transmission capacity adapter 12 transmits information on the lower transmission capacity of the transmission link in the direction of higher transmission capacity, i.e. to the first ATM switch 11. The information is transmitted in a message with a length of one cell at the physical layer. Correspondingly the second transmission capacity adapter 12' transmits information on the lower transmission capacity in the direction of higher transmission capacity, i.e. to the second ATM switch 11'. By means of the information transmitted the ATM switches 11, 11' can then take the real transmission capacity available into account when allowing set-up of new connections.

The transmission connection forming a bottle neck does not need to be located between two transmission capacity adapters as shown in Figure 2, but any section of the virtual connection can form a bottle neck.

Unlike in Figure 2, the transmission capacities of the transmission connections can also change in some situations. In that case it is not only sufficient to compare physical connection types of the switches, but also necessary to find out momentary transmission capacities. Due to momentary transmission capacities the direction of the message containing information on transmission capacity can also change. Management of such dynamic environment may require messages that are transmitted at regular intervals and transmission of messages in both directions from the transmission capacity adapter.

The ATM switches 11, 11' shown in Figure 2 should also adapt the total traffic of the cells on connections 20, 20' at the ATM layer to correspond to the real capacity between 12 and 12'. Thus the transmission capacity adapters 12, 12' hardly need to buffer cells from the transmission line with higher capacity at all when adapting the cells to the ATM traffic transmission line with lower capacity. As the need for buffering by the adapters is minimized, the ATM switches can manage the quality of service offered to the ATM connections.

Figure 3 illustrates part of the ATM network which comprises two ATM switches 31, 32 and between these three transmission capacity adapters 33, 34, 35, which adapt transmission connections between the switches. It is assumed by way of example that the capacity of the first transmission connection 31 to 33 is 30 Mbit/s, the capacity of the second transmission connection 33 to 34 is 50 Mbit/s, the capacity of the third transmission connection 34 to 35 is 10 Mbit/s, and the capacity of the fourth transmission connection 35 to 32 is 20 Mbit/s.

In the first step each transmission capacity adapter 33, 34, 35 compares the transmission connections connected to the adapter and transmits a message on the real transmission capacity in the direction of higher capacity. In that case the first adapter 33 transmits a message on a transmission connection with 30 Mbit/s to the second adapter 34. The second adapter 34 transmits information on a transmission connection of 10 Mbit/s to the first adapter 33. The third adapter 35 transmits information on a transmission connection of 10 Mbit/s to the second ATM switch 32. After this the adapters that have received a message on transmission capacity have to perform a new comparison in the second step. The first adapter 33 has received information on a transmission capacity of 10 Mbit/s from the second adapter 34. Since the capacity on the first transmission connection 31 to 33 connected to the first adapter is still 30 Mbit/s, the direction that originally had higher transmission capacity becomes the direction with lower transmission capacity. Consequently the direction in which the message on transmission capacity is transmitted needs to be changed. In that case the first adapter 33 transmits a message on a transmission capacity of 10 Mbit/s to the first ATM switch 31. The second adapter 34 has also received a message on transmission capacity, but since the directions of higher and lower transmission capacity have not changed in respect of the second adapter 34, a new message on transmission capacity does not need to be transmitted from the second adapter.

The number of transmission adapters can also be smaller or larger than in Figure 3. The principle is that the adapters should be able to send messages on the real transmission capacity to one another, if necessary, and take these messages into account when comparing the capacities of transmission connections.

The above description of the function of the transmission capacity adapters applies only to a situation where the adapter is between two connections. If there are more connections, one more switch will be needed.

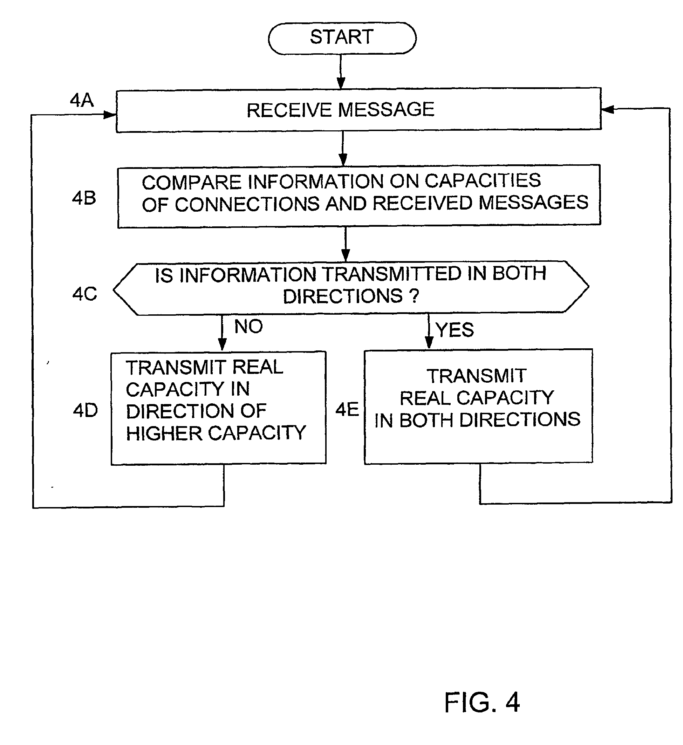

Figure 4 is a flow chart illustrating the function of an adapter in the system according to the invention. The function of the adapter shown corresponds to the situation illustrated in Figure 3, for instance.

In step 4A the adapter receives a message on transmission capacity from one direction from the second adapter. In step 4B the adapter compares the information on transmission capacity included in the message received with the transmission capacity of the other direction found out on the basis of the physical connection. In step 4C a decision is made whether a message on the real transmission capacity is transmitted in both directions from the adapter or only in the direction of higher transmission capacity. If a decision is made to transmit the message only in the direction of higher capacity, we move to step 4D. If a decision is made on transmission of the information in both directions, we move to step 4E. The decision to transmit information in both directions can be based on the fact that the method is employed in a dynamic environment where transmission capacities can change. Management of such a dynamic environment may also require transmission of messages at regular intervals. To receive the next message we move back to step 4A.

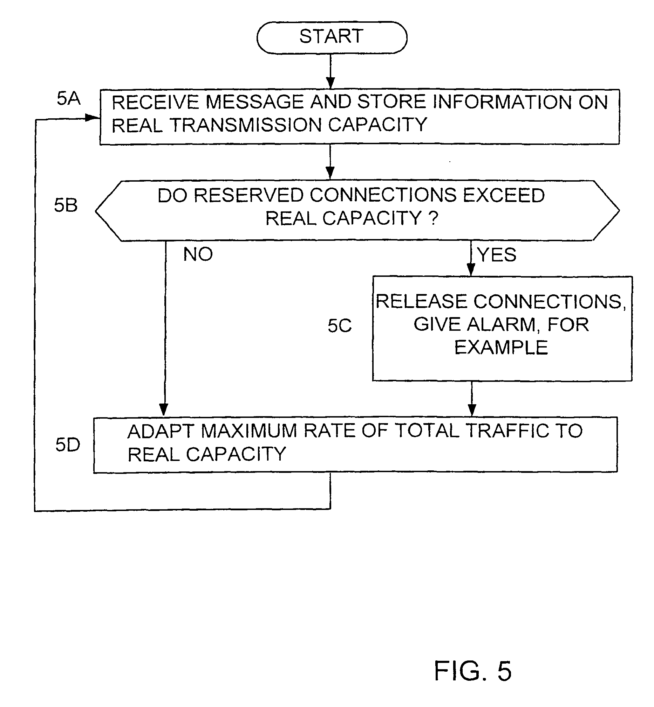

Figure 5 is a flow chart illustrating the function of a switch in the system according to the invention.

In step 5A the switch receives and stores information on the real capacity transmitted by the adapter. For example, when a new connection is to be established, it is checked in step 5B whether the transmission capacity available is sufficient for the reserved connections. If it is found out that the transmission capacity available is insufficient for the reserved connections, we move to step 5C, where one or more connections can be released employing a priority rule or an alarm can be given on a fixed connection. If the transmission capacity available is found to be sufficient, we move to step 5D where the maximum rate of the total traffic is adapted according to the real transmission capacity. Thus the need to buffer cells arriving from the transmission connection with higher capacity decreases.

It is to be understood that the above description and the accompanying drawings are only intended to illustrate the present invention. It is obvious to a person skilled in the art that the invention can be modified in various ways without deviating from the scope of the invention defined in the appended claims.

## Claims

1. A method of adapting transmission capacities in a packet-switched network, the method comprising checking before establishing a connection whether there is enough transmission capacity available for said connection, **characterized by**
comparing the transmission capacities of two transmission connections with different capacities at the junction of said transmission connections,
transmitting information on the real transmission capacity from the junction at least to a switch (11, 11', 31, 32) in the direction of higher transmission capacity, the real capacity being determined according to the transmission connection with lower transmission capacity,
taking the information on the real transmission capacity into account in said switch (11, 11', 31, 32) when a new connection is established.

2. A method according to claim 1, **characterized by** transmitting a message on the real transmission capacity to the switch (11, 11', 31, 32) once.

3. A method according to claim 1, **characterized by** transmitting messages on the real transmission capacity to the switch (11, 11', 31, 32) at regular intervals.

4. A method according to any one of claims 1 to 3, **characterized in that** the packet-switched network is an ATM network (10) and that a message on the real transmission capacity is transmitted to the switch (11, 11', 31, 32) as a message of the physical layer with a length of one cell.

5. A system for adapting transmission capacities of a packet-switched network, the system comprising at least two switches (11, 11', 31, 32) and at least two successive transmission connections with different transmission capacities between said switches (11, 11', 31, 32), **characterized in that** the system also comprises
means (12, 12', 33, 34, 35) for comparing the transmission capacities of the transmission connections at the junction of two transmission connections with different transmission capacities,
means (12, 12', 33, 34, 35) for transmitting information on the real transmission capacity available from said junction at least to the switch (11, 11', 31, 32) in the direction of higher transmission capacity, the real transmission capacity being determined according to the transmission connection with lower capacity, and
means for taking the information on the transmission capacity into account in the switch (11, 11', 31, 32) which received it when a new connection is established.

6. A system according to claim 5, **characterized in that** the packet-switched network is an ATM network (10).

7. A transmission capacity adapter (12, 12', 33, 34, 35) for adapting two transmission connections with different transmission capacities in a packet-switched network, **characterized in that** it comprises
means for comparing the transmission capacities of the transmission connections at the junction of two transmission connections with different capacities, and
means for transmitting information on the real transmission capacity available at least to a node (11, 11', 32, 33, 34) in the direction of higher transmission capacity, the real transmission capacity being determined according to the transmission connection with lower transmission capacity.

8. A transmission capacity adapter (12, 12', 33, 34, 35) according to claim 7, **characterized in that** the adapter also comprises
means for finding out the transmission capacity of at least one transmission connection on the basis of the type of the physical connection.

9. A transmission capacity adapter (12, 12', 33, 34, 35) according to claim 7 or 8, **characterized in that** the adapter also comprises
means for finding out the momentary transmission capacity of at least one transmission connection.

10. A transmission capacity adapter (12, 12', 33, 34, 35) according to any one of claims 7 to 9, **characterized in that** the adapter also comprises
means for receiving messages on transmission capacity, and
means for finding out the transmission capacity of at least one transmission connection on the basis of the received message on transmission capacity.

## Patentansprüche

1. Verfahren zum Anpassen von Übertragungskapazitäten in einem paketvermittelten Netzwerk, wobei das Verfahren das Überprüfen vor Verbindungsaufbau umfasst, ob ausreichend Übertragungskapazität für die Verbindung verfügbar ist, **gekennzeichnet durch** das Vergleichen der Übertragungskapazitäten von zwei Übertragungsverbindungen mit unterschiedlichen Kapazitäten an der Kreuzung der Übertragungsverbindungen, **durch** das Übertragen von Informationen zu der realen Übertragungskapazität von der Kreuzung an mindestens einen Switch (11, 11', 31, 32) in Richtung der höheren Übertragungskapazität, wobei die reale Übertragungskapazität gemäß der Übertragungsverbindung mit der geringeren Übertragungskapazität festgelegt wird, und **durch** das Berücksichtigen der Informationen zu der realen Übertragungskapazität in dem Switch (11, 11', 31, 32), wenn eine neue Verbindung aufgebaut wird.

2. Verfahren nach Anspruch 1, **gekennzeichnet durch** das einmalige Übertragen einer Nachricht zur realen Übertragungskapazität an den Switch (11, 11', 31, 32).

3. Verfahren nach Anspruch 1, **gekennzeichnet durch** das Übertragen von Nachrichten zur realen Übertragungskapazität an den Switch (11, 11', 31, 32) in regelmäßigen Zeitabständen.

4. Verfahren nach einem der Ansprüche 1 bis 3, **dadurch gekennzeichnet, dass** das paketvermittelte Netzwerk ein ATM-Netzwerk (10) ist, und dass eine Nachricht zu der realen Übertragungskapazität an den Switch (11, 11', 31, 32) als Nachricht der physikalischen Schicht mit einer Länge von einer Zelle übertragen wird.

5. System zum Anpassen von Übertragungskapazitäten eines paketvermittelten Netzwerkes, wobei das System mindestens zwei Switches (11, 11', 31, 32) und mindestens zwei aufeinander folgende Übertragungsverbindungen mit unterschiedlichen Übertragungskapazitäten zwischen den Switches (11, 11', 31, 32) umfasst, **dadurch gekennzeichnet, dass** das System ferner Mittel (12, 12', 33, 34, 35) zum Vergleichen der Übertragungskapazitäten der Übertragungsverbindungen an der Kreuzung von zwei Übertragungsverbindungen mit unterschiedlichen Übertragungskapazitäten, Mittel (12, 12', 33, 34, 35) zum Übertragen von Informationen zu der verfügbaren realen Übertragungskapazität von der Kreuzung an mindestens den Switch (11, 11', 31, 32) in Richtung der höheren Übertragungskapazität, wobei die reale Übertragungskapazität gemäß der Übertragungsverbindung mit der geringeren Übertragungskapazität festgelegt wird, und Mittel zum Berücksichtigen der Informationen zu der Übertragungskapazität in dem Switch (11, 11', 31, 32), der die Informationen beim Aufbau einer neuen Verbindung erhalten hat, umfasst.

6. System nach Anspruch 5, **dadurch gekennzeichnet, dass** das paketvermittelte Netzwerk ein ATM-Netzwerk (10) ist.

7. Übertragungskapazitätsadapter (12, 12', 33, 34, 35) zum Anpassen von zwei Übertragungsverbindungen mit unterschiedlichen Übertragungskapazitäten in einem paketvermittelten Netzwerk, **dadurch gekennzeichnet, dass** er Mittel zum Vergleichen der Übertragungskapazitäten der Übertragungsverbindungen an der Kreuzung von zwei Übertragungsverbindungen mit unterschiedlichen Übertragungskapazitäten und Mittel zum Übertragen von Informationen zu der verfügbaren realen Übertragungskapazität von der Kreuzung an mindestens einen Knoten (11, 11', 32, 33, 34) in Richtung der höheren Übertragungsgeschwindigkeit, wobei die Übertragungskapazität gemäß der Übertragungsverbindung mit geringerer Übertragungskapazität festgelegt wird, umfasst.

8. Übertragungskapazitätsadapter (12, 12', 33, 34, 35) nach Anspruch 7, **dadurch gekennzeichnet, dass** der Adapter des Weiteren Mittel zum Feststellen der Übertragungskapazität von mindestens einer Übertragungsverbindung an Hand der Art der physikalischen Verbindung umfasst.

9. Übertragungskapazitätsadapter (12, 12', 33, 34, 35) nach Anspruch 7 oder 8, **dadurch gekennzeichnet, dass** der Adapter des Weiteren Mittel zum Feststellen der momentanen Übertragungskapazität von mindestens einer Übertragungsverbindung umfasst.

10. Übertragungskapazitätsadapter (12, 12', 33, 34, 35) nach einem der Ansprüche 7 bis 9, **dadurch gekennzeichnet, dass** der Adapter des Weiteren Mittel zum Empfangen von Nachrichten zur Übertragungskapazität, und Mittel zum Feststellen der Übertragungskapazität von mindestens einer Übertragungsverbindung an Hand der empfangenen Nachricht zur Übertragungskapazität umfasst.

## Revendications

1. Procédé permettant d'adapter des capacités de transmission dans un réseau de commutation de paquets, le procédé comprenant la vérification, avant un établissement d'une connexion s'il existe assez de capacité d'émission disponible pour ladite connexion, **caractérisé par**
la comparaison des capacités de transmission de deux connections d'émission comprenant différentes capacités à la jonction desdites connections de transmission,
l'émission d'informations relatives à la réelle capacité d'émission à partir de la jonction au moins à un commutateur (11, 11', 31, 32) dans la direction de la capacité la plus élevée d'émission, la capacité réelle étant déterminée en fonction de la connexion d'émission ayant une capacité plus faible de transmission,
la prise en considération d'informations relatives à la capacité réelle de transmission dans ledit commutateur (11, 11', 31, 32) quand une nouvelle connexion est établie.

2. Procédé selon la revendication 1, **caractérisé par** l'émission d'un message relatif à la capacité réelle de transmission au commutateur (11, 11', 31, 32) en une fois.

3. Procédé selon la revendication 1, **caractérisé par** l'émission des messages relatifs à la capacité réelle de transmission au commutateur (11, 11', 31, 32) à intervalles réguliers.

4. Procédé selon l'une quelconque des revendications 1 à 3, **caractérisé en ce que** le réseau de commutation de paquets est un réseau d'ATM (10) et qu'un message relatif à la capacité réelle de transmission est émis au commutateur (11, 11', 31, 32) en tant que message de la couche physique ayant une longueur d'une cellule.

5. Système permettant d'adapter des capacités de transmission d'un réseau de commutation de paquets, le système comprenant au moins deux commutateurs (11, 11', 31, 32) et au moins deux connections successives de transmission comprenant différentes capacités de transmission entre lesdits commutateurs (11, 11', 31, 32), **caractérisé en ce que** le système comprend également
des moyens (12, 12', 33, 34, 35) permettant de comparer les capacités de transmission des connections d'émission à la jonction de deux connections d'émission comprenant différentes capacités de transmission,
des moyens (12, 12', 33, 34, 35) permettant d'émettre des informations relatives à la réelle capacité de transmission disponible à partir de ladite jonction au moins au commutateur (11, 11', 31, 32) dans la direction de la capacité la plus élevée de transmission, la réelle capacité de transmission étant déterminée en fonction de la connexion de transmission ayant une capacité plus faible, et
des moyens pour prendre des informations relatives à la capacité de transmission en considération dans le commutateur (11, 11', 31, 32) qui l'a reçue quand une nouvelle connexion est établie.

6. Système selon la revendication 5, **caractérisé en ce que** le réseau de commutation de paquets est un réseau d'ATM (10).

7. Adaptateur de capacité de transmission (12, 12', 33, 34, 35) permettant d'adapter deux connections de transmission comprenant différentes capacités de transmission dans un réseau de commutation de paquets, **caractérisés en ce qu'**il comprend
des moyens permettant de comparer les capacités de transmission des connections de transmission à la jonction de deux connections de transmission comprenant différentes capacités, et
des moyens permettant d'émettre des informations relatives à la réelle capacité d'émission disponible au moins à un noeud (11, 11', 32, 33, 34) dans la direction de la capacité la plus élevée de transmission, la réelle capacité d'émission étant déterminée en fonction de la connexion de transmission ayant une capacité plus faible de transmission.

8. Adaptateur de capacité de transmission (12, 12', 33, 34, 35) selon la revendication 7, **caractérisé en ce que** l'adaptateur comprend également
des moyens permettant de trouver la capacité de transmission au moins d'une connexion de transmission sur la base du type de connexion physique.

9. Adaptateur de capacité de transmission (12, 12', 33, 34, 35) selon la revendication 7 ou 8, **caractérisé en ce que** l'adaptateur comprend également
des moyens permettant de trouver la capacité momentanée de transmission d'au moins une connexion de transmission.

10. Adaptateur de capacité de transmission (12, 12', 33, 34, 35) selon l'une quelconque des revendications 7 à 9, **caractérisé en ce que** l'adaptateur comprend également
des moyens permettant de recevoir des messages relatifs à la capacité de transmission, et
des moyens permettant de trouver la capacité de transmission d'au moins une connexion de transmission sur la base du message reçu relatif à la capacité de transmission.
